# EUROPEAN PATENT SPECIFICATION

(11) **EP 0 962 862 B1**
(45) Date of publication and mention of the grant of the patent: **16.10.2002**
(21) Application number: 98110357.5
(22) Date of filing: 05.06.1998
(51) Int. Cl.: G06F 11/00, G06F 11/22

(54) **Apparatus and method for remote diagnostic of data processing units**
Vorrichtung und Verfahren für die Ferndiagnose von Datenverarbeitungseinheiten
Dispositif et méthode de diagnostique à distance d'unités de traitement des données

(43) Date of publication of application: 08.12.1999
(73) Proprietor: Agilent Technologies, Inc. (a Delaware corporation), Palo Alto, CA 94303 (US)
(72) Inventor: Holzinger, Bernhard, 71034 Böblingen (DE); Weedemann, Jörg, 71034 Böblingen (DE); Link, Ralf, 71126 Gäufelden (DE)
(74) Representative: Kurz, Peter

(56) References cited:
- EP-A- 0 671 631
- GB-A- 2 261 967
- US-A- 4 057 847
- US-A- 4 953 165

## Description

### BACKGROUND OF THE INVENTION

The present invention relates to a diagnostic of a data processing unit (DPU).

Today, the overall number of personal computers (PCs), workstations, and so on is increasing year by year. Those kind of data processing units are physically spread all over the place and might be interconnected with standard network interfaces such as local area networks (LAN).

The diagnostic of a remote DPU, i.e. a DPU which is not physically located on the acting person's "desk", is normally accomplished by either bringing a skilled person (i.e. a hardware or software expert) to the DPU, or by providing software packages installed on the DPU to perform a diagnostic task as long as the DPU is functional.

Document US-A-4 953 165 discloses a diagnosis system for identifying hardware faults in a data processing system. Said diagnosis can be operated either from a local diagnostic program or from a remote location through a modem. However, said diagnosis system cannot not operate independently of the data processing unit of the system so that said diagnosis mechanism depends on the presence of a fully functional processing unit.

### SUMMARY OF THE INVENTION

It is an object of the present invention to provide an improved remote diagnostic for a data processing unit.

The object is solved by the independent claims. Preferred embodiments are shown by the dependent claims.

According to the invention, a diagnostic unit is provided for a remote diagnosis of a data processing unit DPU. The diagnostic unit is adapted to be coupled to a remote DPU via a network and to an internal bus of the DPU. The diagnostic unit comprises a central processing unit CPU for controlling a diagnosis and/or a monitoring independently of the DPU by monitoring a data communication within the DPU and/or of the DPU with external devices, and/or by performing tests with the DPU.

The invention thus provides an "intelligent" diagnostic of the DPU that allows a continuous and on-going monitoring of the DPU independent of the functional state of the DPU. In contrast to diagnosis modules as known in the art, a diagnosis of the DPU 100 can thus be performed even when the DPU 100 is inoperable or when the DPU 100 would not any more support an "unintelligent" monitoring.

The invention further allows an active diagnosis and/or a preventive diagnosis of the DPU, so that occurring failures or failures which are apparently likely to occur in the next future can be determined and suitable (counter) measures can be initiated or triggered. Possible down times of the DPU can thus be decreased or even be avoided.

The diagnostic unit preferably signals from time to time and/or according to a pre-defined notification scheme the present state of the DPU to a remote DPU. When a failure occurs or is likely to occur, the remote DPU can provide a diagnosis of the DPU via the network and preferably using the diagnostic unit.

### BRIEF DESCRIPTION OF THE DRAWINGS

Other objects and many of the attendant advantages of the present invention will be readily appreciated and become better understood by reference to the following detailed description when considering in connection with the accompanied drawings in which:
- Fig. 1: shows a schematic diagram of the remote diagnostic scheme according to the invention, and
- Fig. 2: shows a preferred example of the diagnostic unit 110.

### DETAILED DESCRIPTION OF THE INVENTION

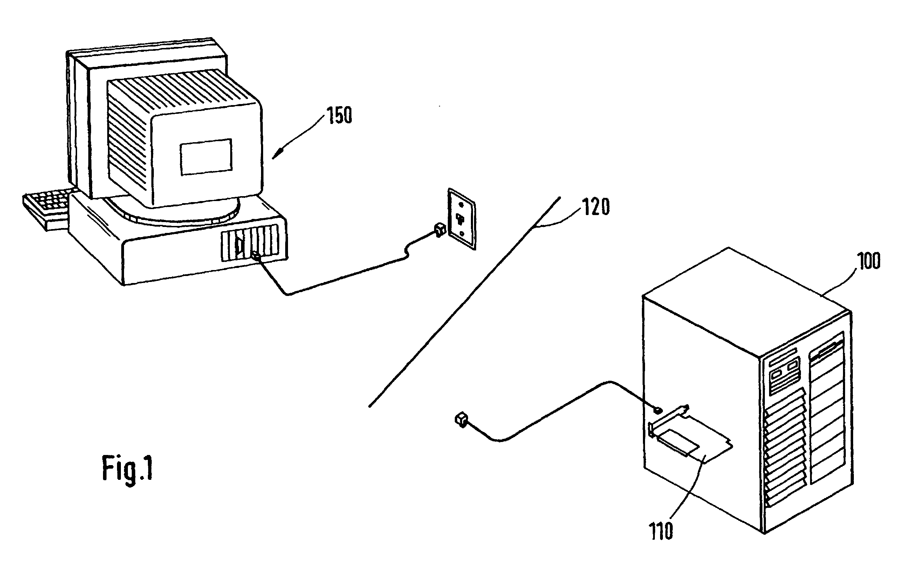

Fig. 1 shows a schematic diagram of the remote diagnostic scheme according to the invention. A data processing unit (DPU) 100 comprises a diagnostic unit 110 that can be coupled by any means as known in the art to a network 120. The DPU 100 represents the DPU to be monitored by the diagnostic unit 110.

A remote DPU 150 can also be coupled to the network 120. The remote DPU 150 is a system that can interact with the diagnostic unit 110, thus allowing a user (e.g. sitting in front of the remote DPU 150) to control a task performed by the diagnostic unit 110. The unit 150 could therefore be called a client station.

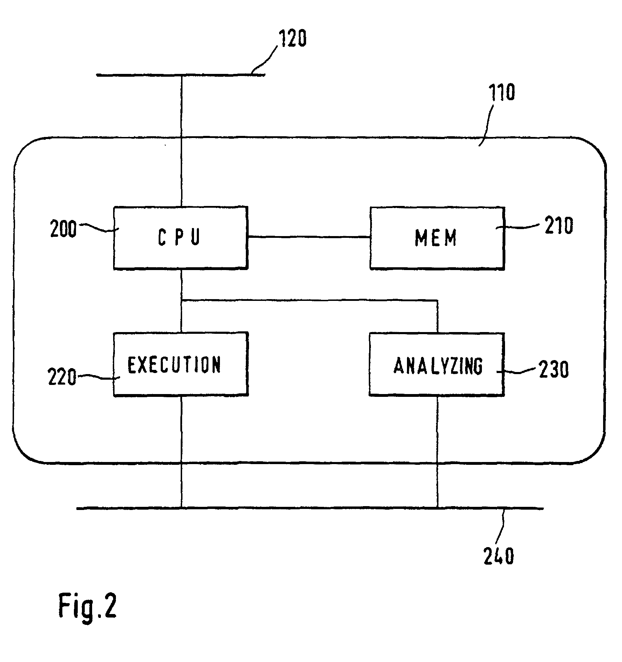

Fig. 2 shows in a schematic diagram a preferred example of the diagnostic unit 110. The diagnostic unit 110 provides an own central processing unit (CPU) 200 and is thus capable of performing all kind of diagnosis and/or monitoring independently of the DPU 100. The CPU 200 is connected to a memory 210 and to an execution unit 220 and/or an analyzing unit 230. In operation, the execution unit 220 and the analyzing unit 230 are coupled to an internal bus 240 of the DUT 100, whereby the internal bus 240 may represent one or more different internal busses or other internal communication paths of the DUT 100. The CPU 200 can be coupled to the network 120 (i.e. the 'outside world') e.g. via LAN or a serial port such as modem, nullmodem or the like, and might also be coupled (not shown) to the internal bus 240.

In a preferred embodiment, the diagnostic unit 110 comprises an own (not shown) power supply unit independent of a power supply of the DPU 100. The independent power supply unit might be connected to the main electrical supply and/or battery powered.

The analyzing unit 230 is provided for passively monitoring data communications within the DPU 100 and/or for passively monitoring data communications of the DPU 100 with external devices. For that purpose, the analyzing unit 230 measures and analyzes data, data streams, and/or events on the internal bus 240. The execution unit 220 is provided for actively performing tests with the DPU 100. For that purpose, the execution unit 220 provides stimulus signals to the DPU 100 and/or requests specific tasks, data, operations, or the like from (individual components of) the DPU 100. The analyzing unit 230 and the execution unit 220 are controlled by the CPU 200 in a way as known in the art.

The diagnostic unit 110 might be used in an active diagnostic mode and/or a preventive diagnostic mode, as explained below.

In the active diagnostic mode, the execution unit 220 of the diagnostic unit 110 provides stimuli signals to the DPU 100 and analyzes the behavior thereof. One example for an active mode is a memory testing. The diagnostic unit 110 reads in a deterministic way all locations of a memory of the DPU 100 (e.g. a RAM), thus determining whether there is a problem with that memory.

In the preventive diagnostic mode, the diagnostic unit 110 performs an ongoing analysis of the DPU 100 by actively and/or passively monitoring the DPU 100. In case of an upcoming problem, the diagnostic unit 110 will preferably emit a warning signal to the DPU 100 and/or one or more other DPUs via the network 120 such as the remote DPU 150 or to another notification path (e.g. an alphanumeric pager). The notification of that warning signals will allow the owner of the DPU 100 to initiate appropriate counter measures (e.g. repair of the DPU 100) before the DPU 100 might break. This allows preventing a possible business loss to the owner of the DPU 100 and significantly increases the availability of the DPU 100.

As well in the active diagnostic mode as in the preventive diagnosis mode, the diagnostic provided by the diagnostic unit 110 can be triggered from the diagnostic unit 110 itself or from 'outside', e.g. from the remote DPU 150. In the former case, the diagnostic unit 110 performs a diagnosis of the DPU 100 according to a given scheme, such as a pre-given notification, time, or event scheme, or on demand. In the latter case, the diagnostic unit 110 receives a trigger signal initiating a diagnostic activity carried out by the diagnostic unit 110.

When the diagnostic unit 110 detects a failure, which already occurred or which will possible occur in future, the diagnostic unit 110 will initiate appropriate measures such as emitting a warning signal via the network 120 to the remote DPU 150 or to another notification path (e.g. an alphanumeric pager) indicating a fault and/or a full operation of the DPU 100, starting own failure correcting measures, and/or requesting a remote diagnosis, e.g. from the remote DPU 150.

For providing a remote diagnosis, either on request by the diagnostic unit 110 or according to a pre-given notification, time, or event scheme, the remote DPU 150 can connect to the diagnostic unit 110 via the network 120. This can be accomplished either by a person trying to establish connection with the diagnostic unit 110 or automatically by a defined scheme provided by the remote DPU 150. The remote DPU 150 can thus run a diagnose on the DPU 100 with a given tool set provided by the remote DPU 150. The tool set might consist of diagnostic software tasks, also called diagnostic 'daemons', that can be downloaded to the diagnostic unit 110 from the remote DPU 150 or from any other DPU connected to the network 120. The theoretical number of possible diagnostic daemons is thus infinite, whereas the actual number of daemons running on the diagnostic unit 110 is limited by the available resources. This so-called "Cafeteria Approach" allows to select "the right" daemon for a specific task to be done.

Even when the diagnostic unit 110 detects no failure, the diagnostic unit 110 might provide signals from time to time to the network 120 and/or the DPU 100 indicating a (full, limited, or sufficient) functionality of the DPU 100.

In one embodiment, the analyzing unit 230 comprises a protocol checker (not shown) for monitoring traffic on the internal bus 240. The protocol checker is provided for detecting protocol violations on the internal bus 240. Protocol violations can be caused e.g. by an adapter card in the DPU such as a NIC (Network Interface Adapter) or a Video Adapter. Protocol violations could typically lead the DPU 100 to crash without any obvious reason for the owner of the DPU 100.

In another embodiment, the analyzing unit 230 comprises a performance sequence counter (not shown) for measuring a bus utilization of the internal bus 240 thus indicating the "load" of the bus. A single measurement task might be provided generating an alert if a certain threshold is violated. An example of an alert could be that the DPU 100 is running at more than x % utilization for a certain period of time (e.g. more than 98 % utilization for more than two hours). This indicates that the DPU 100 suffers under heavy data traffic or that the DPU 100 might be crashed. The utilization could, on the other hand, verify the execution of a specific task running on the DPU 100, e.g. a backup task. In an example, a backup task of the DPU 100 is always scheduled for midnight. The actual execution of the backup task can then be verified by determining the utilization that is expected to be y %, e.g. 90 %.

In a further preferred embodiment, the diagnostic unit 110 is provided as a plug-in card, e.g. a PCI-add-on card, which can be plugged into any PCI compliant PC or PC server. The plug-in card preferably features an on-board CPU 200, an onboard diagnostic hardware comprising the analyzing unit 230 and the exercising unit 220, and the memory 210 as a flash memory and a DRAM (dynamic random-access memory). The CPU 200 is connectable to the network 120 via LAN and/or a Serial (Modem). A communication to the internal bus 240 is provided by PCI and IPMI interfaces. The diagnostic unit 110 allows performing e.g. a preventive memory diagnosis by deterministic reading through the available memory of the DPU 100. In case that the reading results in an error, this error is documented in a specific storage location of the DPU 100 which can be accessed by the IPMI interfaces.

In yet a further preferred embodiment, the reading mechanism of the diagnostic unit 110, comprising the CPU 200, the execution unit 220, and the analyzing unit 230, is preferably implemented by an ASIC (Application Specific Integrated Circuit) e.g. on a plug-in card of the diagnostic unit 110 featuring a PCI-Interface. The on-board CPU 200 preferably reads the memory locations of the DPU 100 using the execution unit 220 of the ASIC and the internal PCI bus 240 of the DPU 100. This pure hardware mechanism does not depend on the status of the operating system (OS) or the presence of a fully functional CPU of the DPU 100. All of the accessible hardware of the DPU 100 can be diagnosed using the internal PCI bus 240 as a window to the DPU 100. The diagnostic unit 110 might provide further diagnosis of SCSI controllers, USB controllers, hard-disk units and so on of the DPU 100.

## Claims

1. A diagnostic unit (110) for a remote diagnosis of a data processing unit DPU (100), the diagnostic unit (110) being adapted to be coupled to a remote DPU (150) via a network (120)
**characterized in** the diagnostic unit (110) being adpated to be coupled to an internal bus (240) of the DPU (100), said diagnostic unit (110) comprising:
a central processing unit CPU (200) for controlling a diagnosis and/or a monitoring independently of the DPU (100) by monitoring a data communication within the DPU (100) and/or of the DPU (100) with external devices, and/or by performing tests with the DPU (100), said diagnostic unit (110) allowing a diagnosis and/or monitoring of the DPU (100) independent of the functional state of the DPU (100).

2. The diagnostic unit (110) of claim 1, further comprising an execution unit (220), coupled to the CPU (200) and the internal bus (240) of the DPU (100), for passively monitoring data communications within the DPU (100) and/or of the DPU (100) with external devices.

3. The diagnostic unit (110) of claim 2, wherein the execution unit (220) provides means for measuring and analyzing data, data streams, and/or events on the internal bus (240).

4. The diagnostic unit (110) according to any one of the claims 1-3, further comprising an analyzing unit (230), coupled to the CPU (200) and the internal bus (240) of the DPU (100), for actively performing tests with the DPU (100).

5. The diagnostic unit (110) of claim 4, wherein the analyzing unit (230) provides means for emitting a stimulus signal to the DPU (100) and/or for requesting specific tasks, data, and/or operations from the DPU (100).

6. The diagnostic unit (110) according to any one of the claims 1-5, further comprising a power supply unit independent of a power supply of the DPU (100).

7. The diagnostic unit (110) according to any one of the claims 1-6, wherein the diagnostic unit (110) is provided as a plug-in card to be plugged into the DPU (100).

8. A method for proving a remote diagnostic of a data processing unit DPU (100), the method comprising the steps of:
(a) coupling a diagnostic unit (110) to an internal bus (240) of the DPU (100),
(b) monitoring a data communication within the DPU (100) and/or of the DPU (100) with external devices and/or by performing tests with the DPU (100),
(c) coupling the diagnostic unit (110) to a remote DPU (150) via a network (120), said diagnostic unit (110) allowing a diagnosis and/or monitoring of the DPU (100) independent of the functional state of the DPU (100), and
(d) providing a signal to the remote DPU (150) indicating the functional state of the DPU (100).

## Patentansprüche

1. Eine Diagnoseeinheit (110) für eine Ferndiagnose einer Datenverarbeitungseinheit DPU (100), wobei die Diagnoseeinheit (110) vorgesehen ist dazu, an eine entfernte DPU (150) durch ein Netzwerk (120) angeschlossen zu werden, charakterisiert dadurch, daß die Diagnoseeinheit (110) vorgesehen ist, an einen internen Bus (240) der DPU (100) gekoppelt zu werden; wobei die Diagnoseeinheit (110) aufweist:
eine zentrale Prozesseinheit (200) zum Kontrollieren einer Diagnose und/oder zum unabhängigen Überwachen der DPU (100) durch Überwachen einer Datenkommunikation innerhalb der DPU und/oder der DPU (100) mit externen Vorrichtungen und/oder durch Durchführen von Tests mit der DPU (100), wobei genannte Diagnoseeinheit (110) eine Diagnose und/oder Überwachen der DPU (100) ermöglicht unabhängig vom Funktionszustand der DPU (100)

2. Die Diagnoseeinheit (110) nach Anspruch 1, zudem aufweisend eine Ausführungseinheit (220), gekoppelt an die CPU (200) und den internen Bus (240) der DPU (100) zum passiven Überwachen von Datenkommunikationen innerhalb der DPU (100) und/oder der DPU (100) mit externen Vorrichtungen.

3. Die Diagnoseeinheit (110) nach Anspruch 2, wobei die Ausführungseinheit (220) Mittel vorsieht zum Messen und Analysieren von Daten, Datenströmen und/oder Ereignissen im internen Bus (240).

4. Die Diagnoseeinheit (110) nach einem der Ansprüche 1-3, zudem aufweisend eine Analyseeinheit (230), gekoppelt an die CPU (200) und den internen Bus (240) der DPU (100), zum aktiven Durchführen von Tests mit der DPU (100).

5. Die Diagnoseeinheit (110) nach Anspruch 4, wobei die Analyseinheit (230) Mittel vorsieht zum Aussenden eines Stimulus-Signals an die DPU (100) und/oder zum Anfordern spezifischer Aufgaben, Daten und/oder Operationen von der DPU (100).

6. Die Diagnoseeinheit (110) nach einem der Ansprüche 1-5, zudem aufweisend eine Energieversorgungseinheit unabhängig von einer Energieversorgung der DPU (100).

7. Die Diagnoseeinheit (110) nach einer der Ansprüche 1-6, wobei die Diagnoseeinheit (110) vorgesehen ist als Steckkarte zum Hineinstecken in die DPU (100).

8. Ein Verfahren zum Nachweisen einer Ferndiagnose einer Datenverarbeitungseinheit DPU (100), wobei das Verfahren folgende Schritte aufweist:
a) Koppeln einer Diagnoseeinheit (110) an einen internen Bus (240) der DPU (100),
b) Überwachen einer Datenkommunikation innerhalb der DPU (100) und/oder der DPU (100) mit externen Vorrichtungen und/oder Durchführen von Tests mit der DPU (100),
c) Koppeln der Diagnoseeinheit (110) an eine entfernte DPU (150) durch ein Netzwerk, wobei die Diagnoseeinheit (110) eine Diagnose und/oder Überwachen der DPU (100) ermöglicht unabhängig vom Funktionszustand der DPU (100), und
d) Vorsehen eines Signals an die entfernte DPU (150) zum Anzeigen des Funktionsstatus der DPU (100).

## Revendications

1. Une unité de diagnostic (110) pour un diagnostic à distance d'une unité de traitement de données DPU (100), l'unité de diagnostic (110) étant adaptée pour être couplée à une DPU à distance (150) via un réseau (120), **caractérisé par** un bus interne (240) de la DPU (100), ladite unité de diagnostic (110) comprenant :
une unité centrale UC (200) pour contrôler un diagnostic et/ou une surveillance indépendamment de la DPU (100) en surveillant une communication de données à l'intérieur de la DPU (100) et/ou de la DPU (100) avec des appareils externes, et/ou en réalisant des tests avec la DPU (100), ladite unité de diagnostic (110) permettant un diagnostic et/ou une surveillance de la DPU (100) indépendamment de l'état de fonctionnement de la DPU (100).

2. L'unité de diagnostic (110) suivant la revendication 1, comprenant en outre une unité d'exécution (220) couplée à l'UC (200) et au bus interne (240) de la DPU (100), pour une surveillance passive des communications de données à l'intérieur de la DPU (100) et/ou de la DPU (100) avec des appareils externes.

3. L'unité de diagnostic (110) suivant la revendication 2 dans laquelle l'unité d'exécution (220) offre des moyens pour mesurer et analyser les données, les flux de données, et/ou les événements sur le bus interne (240).

4. L'unité de diagnostic (110) suivant l'une des revendications 1 à 3, comprenant en outre une unité d'analyse (230), couplée à l'UC (200) et au bus interne (240) de la DPU (100), pour réaliser activement des tests avec la DPU (100).

5. L'unité de diagnostic (110) suivant la revendication 4 dans laquelle l'unité d'analyse (230) offre des moyens pour émettre un signal stimulant la DPU (100) et/ou pour demander des tâches, des données et/ou des opérations spécifiques de la DPU (100).

6. L'unité de diagnostic (110) suivant l'une des revendications 1 à 5, comprenant en outre une unité d'alimentation électrique indépendante de l'alimentation électrique de la DPU (100).

7. L'unité de diagnostic (110) suivant l'une des revendications 1 à 6 dans laquelle l'unité de diagnostic (110) est équipée d'une carte plug-in à enficher dans la DPU (100).

8. Une méthode pour homologuer un diagnostic à distance d'une unité de traitement de données DPU (100), la méthode comprenant les étapes suivantes :
a) couplage d'une unité de diagnostic (110) à un bus interne (240) de la DPU (100),
b) surveillance d'une communication de données à l'intérieur de la DPU (100) et/ou de la DPU (100) avec des appareils externes et/ou en réalisant des tests avec la DPU (100),
c) couplage d'une unité de diagnostic (110) à une DPU à distance (150) via un réseau (120), ladite unité de diagnostic (110) permettant un diagnostic et/ou une surveillance de la DPU (100) indépendamment de l'état de fonctionnement de la DPU (100), et
d) délivrance d'un signal à la DPU à distance (150) indiquant l'état de fonctionnement de la DPU (100).
